# EUROPEAN PATENT APPLICATION

(11) **EP 1 514 762 A1**
(43) Date of publication of application: **16.03.2005**
(21) Application number: 03077877.3
(22) Date of filing: 10.09.2003
(51) Int. Cl.: B62B 1/14, B60F 1/02, B61D 15/10

(54) **Hand truck for transporting and supporting a warning equipment, used along a railway track**

(71) Applicant: Infra Safety Services B.V., 3316 BE Dordrecht (NL)
(72) Inventor: EstiradoFontalba, Angel Infra Safety Services BV, 3316 BE Dordrecht (NL)
(74) Representative: Lips, Hendrik Jan George, Ir.

(57) **Abstract**

The invention relates to a hand truck for transporting and supporting apparatus, in particular safety apparatus to be used in work at railway tracks, in which the truck is a lightweight structure suited for being pulled or pushed forward across the gravel bed, the sleepers or also across the rail. To that end, the truck comprises a frame (2), two spaced apart wheels (5) connected to said frame, which are located on one axis and in which at least one roller wheel (6) is provided, which has such a profile that it is suitable for being rolled across a rail.

## Description

The present invention relates to a device for transporting and supporting apparatus, in particular apparatus to be used during work at railway tracks. More in particular, this concerns special safety equipment used during work at railway lines for protection of the railway workers.

Such equipment comprises a central unit which is always arranged near the working site and in which incoming detecting signals are processed and transformed into one or more warning signals, e.g. acoustic and light signals. The central unit is connected to one or more signalling means which are arranged at both sides of the railway tracks spaced from the working site or are coupled to the railway tracks, in which the distance is such that the time between producing a warning signal and the moment on which a detected train passes the working site is amply sufficient for the railway workers to leave the track, taking along their tools. The signalling means can be connected to said central unit through a cable or a wireless connection. When moving the work along the track or when the work is discontinued, the central unit should be taken along and, if necessary, the cables should be rolled up and unrolled.

Central units of such safety equipment are generally rather large and heavy as a result of which taking them along and moving them by manpower is usually troublesome and definitely if wire drums have to be taken along at the same time.

The object of the invention is to provide a device by which the central unit of such safety equipment can easily be carried along or across the track and which can serve as a support for the central unit at the same time.

Accordingly, the invention provides for, that the device comprises a frame, two spaced apart wheels connected to the frame, which are located on one axis, in which at least one roller wheel is provided, which is profiled such that it is suited to be rolled across a rail. The device is embodied as a non-independently driven vehicle in which the configuration having two wheels and at least one roller wheel allows for easily pulling or pushing the frame across a rail as well as across the gravel of the ballast bed or across the sleepers. The wheels are preferably provided with pneumatic tyres.

Apart from the advantage that the central unit of the safety equipment can be taken along or across the track almost without any effort with the device according to the invention, the device has the additional advantage that the central unit can always be properly arranged which is extremely important for providing visibility of warning signals to be given off.

According to a further development, it is provided for that the two wheels are mounted on a common axle and that the roller wheel is mounted on the common axle between the wheels. In this way, only one axle is required, on which both the wheels and the roller wheel can be mounted.

According to a preferred embodiment, a second roller wheel is provided, being mounted at a distance from said common axle and being aligned with the first roller wheel mounted on the common axle. With the roller wheels aligned in a direction transverse to the common axle, the device can easily be pulled or pushed along across one single rail. For being able to keep the roller wheels on the rail with ease, it is further provided for, that the roller wheels are profiled such, that they follow the cross-section of the rail at least partly, and that at both sides they have their ends provided with flanges having a larger diameter than the diameter of the roller wheels between the flanges.

The diameter of the roller wheels is chosen such, that the largest diameter of the roller wheels is half or less than the diameter of the wheels having pneumatic tyres. As a consequence of this, the device can easily be moved from a position in which it stands on the wheels, to a position in which the roller wheels come to bear on a rail. Further, the diameters of wheels and roller wheels are such, that the wheels are freewheeling when the device stands on a rail with the roller wheels.

According to a further development it is provided for, that the device is a lightweight structure comprised of substantially two plates of a lightweight material, such as e.g. aluminium, a first plate representing the bottom plate and the second plate being fixed to said bottom plate across an angle. The second plate has a straight front portion and side portions extending along the respective side edges of the bottom plate. The bottom plate is provided with flanged edges, in which the common axle is positioned in the flanged rear edge and in which the rear edge of the bottom plate and the bottom plate both have a recess for being able to accommodate a roller wheel on the common axle. In this way, one can create a lightweight structure in a simple manner from two plates, said structure being sufficiently rigid for being moved across or along the railway track in loaded condition.

In order to be able to position a central unit of a safety apparatus on the device, means for fixing at least one apparatus on the device are provided, said means comprising at least one receiving edge and a locking member for engaging the apparatus on at least one location. Preferably, the locking member substantially comprises a slide under spring tension, intended to engage an opening or a passage on the apparatus. With the receiving edge and the locking member, it is possible to establish an amply sufficient locking so that the safety apparatus will remain fixedly connected to the device under all circumstances.

In the following, the device is further explained by way of the example given in the drawing, in which:
- fig. 1: shows a rear view of the device with a safety apparatus mounted on it;
- fig. 2: shows a side view of the device with a safety apparatus mounted on it;
- fig. 3: shows a rear view of the device with a safety apparatus in more detail; and
- fig. 4: shows a side view of the device with a safety apparatus in more detail.

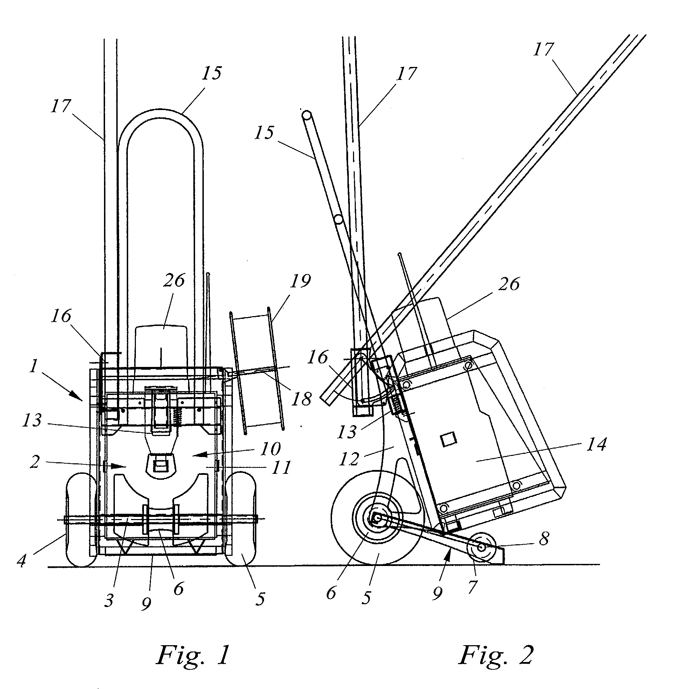

Fig. 1 shows a rear view of the device 1 comprising a frame 2, wheels 4, 5 mounted on a common axle 3 and a first roller wheel 6 likewise mounted on said axle 3. In the side view according to fig. 2, a second roller wheel 7 is visible which is mounted, at a distance from said first roller wheel 6, on an axle 8 of its own.

Frame 2 consists of a first plate, the bottom plate 9, and a second plate 10 fixed to it, e.g. welded to it, comprising a front portion 11 and side portions 12. Frame 2 is further provided with a locking member 13 by which an apparatus 14 mounted on the device, e.g. a safety apparatus, can be fixedly connected to said device. Further, a vertically adjustable brace 15 is provided, which serves for pulling or pushing the device forward, an adjustable holder 16 for an antenna 17 and a collapsible tube portion 18 on which a wire drum 19 can be mounted.

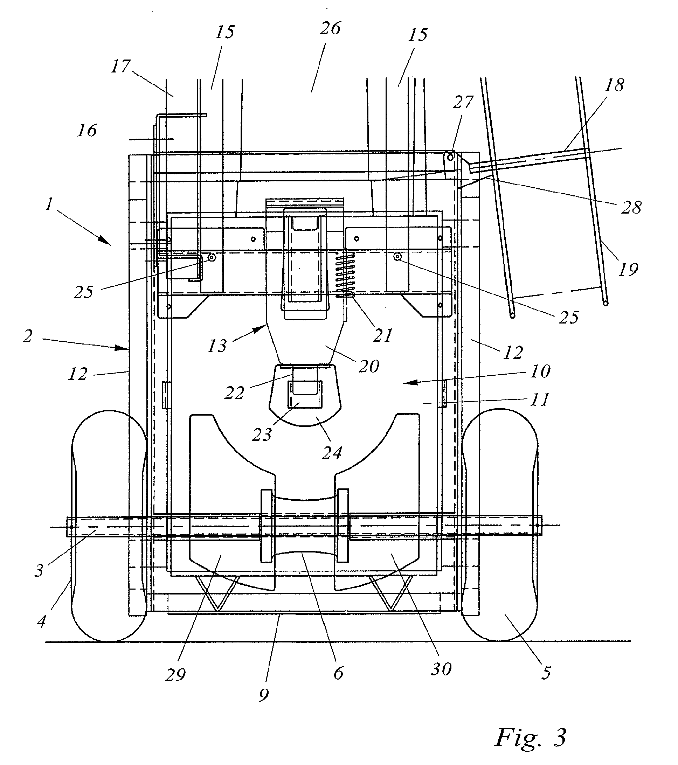

Fig. 3 shows the rear view in more detail. Locking member 13 substantially comprises a slide 20 that can be slid upwards against the action of a spring 21. In the locked position, the end 22 of the slide 20 protrudes in a slot 23 provided in the safety apparatus 14. In the illustrated example, the slot 23 is a U-profile projecting through an opening 24 in the front portion 11 of the second plate 10. The opening 24 and the U-profile of the slot 23 can be adapted to one another so that an exact fit can be obtained. Then, the end 22 can project through the slot 23 and extend to the front portion of the second plate 10.

Through two openings in the rear side of front portion 11 of the second plate 10, brace 15 can be adjusted vertically, in which a stop 25 at the ends prevents the brace from being pulled out of the openings. Although possibly a brace 15 of lesser height may suffice, preferably it is provided for, that the brace can be pulled out across a considerable distance, in order to provide good visibility of a warning light 26 mounted on top of the safety apparatus.

The collapsible tube portion 18 for the wire drum 19 has a pivot 27 and a supporting part 28 in such a way that it can pivot no further than a predetermined oblique position. This prevents the wire drum 19 from getting loose from the tube portion 18 during unwinding or winding the wire.

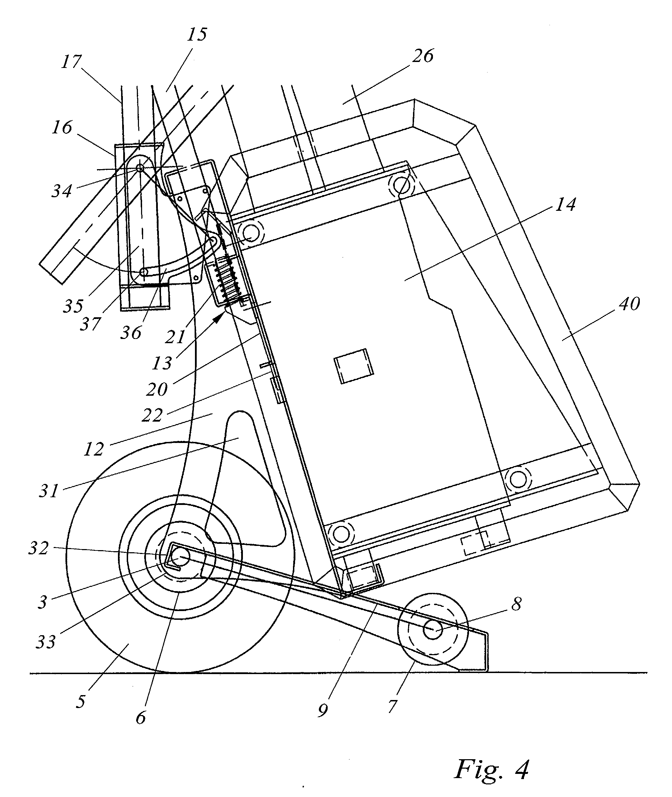

In frame 2, recesses in said first and second plate are provided for a largest possible weight reduction, in which figs. 1, 3 show recesses 29, 30 in the front portion of second plate 11 and figs. 2, 4 show recesses 31 in the side portions 12 of second plate 11.

Fig. 4 further shows that the axle 3 is mounted in a flanged portion 32 of the bottom plate 9 and that the end 33 of the side portion 12 of second plate 10 is part of the bearing of axle 3.

The adjustable holder 16 for an antenna 17 to be placed in it is rotatable around a point 34 and can be locked in a desired position within a determined range with the help of the adjusting plate 35 with slot 36 and fixing means 37 schematically indicated. Due to this, the antenna 17 can always be put in a vertical position, independent of the position of device 1 and further, it is possible to bring antenna 17 downward, e.g. for passing underneath a bridge.

A U-shaped receiving edge 38 is mounted at the lower side of the front portion 11 of the second plate 10, in which edge 38 said safety apparatus 14 bears on legs 39. Together with locking member 13, receiving edge 38 represents the means by which the safety apparatus can be fixed on device 1.

Finally, a safety edge 40 is provided for protection of the safety apparatus 14. Such an edge will mostly be unnecessary since the housing of said safety equipment is mostly of sufficiently solid construction.

## Claims

1. Device for transporting and supporting apparatus, in particular apparatus to be used during work at railway tracks, said device comprising a frame, two spaced apart wheels connected to the frame, which are located on one axis, in which at least one roller wheel is provided, which is profiled such that it is suited to be rolled across a rail.

2. Device according to claim 1, **characterized in that** the two wheels are mounted on a common axle and that the roller wheel is mounted on the common axle between the wheels.

3. Device according to claim 2, **characterized in that** a second roller wheel is provided, being mounted at a distance from said common axle and being aligned with the first roller wheel mounted on the common axle.

4. Device according to claims 1-3, **characterized in that** the two wheels are provided with pneumatic tyres.

5. Device according to claim 1, **characterized in that** the roller wheels are profiled such, that they follow the cross-section of the rail at least partly, and that at both sides they have their ends provided with flanges having a larger diameter than the diameter of the roller wheels between the flanges.

6. Device according to claims 4-5, **characterized in that** the largest diameter of the roller wheels is half or less than the diameter of the wheels having pneumatic tyres.

7. Device according to claims 1-6, **characterized in that** the frame is a lightweight structure comprised of substantially two plates of a lightweight material, such as e.g. aluminium, a first plate representing the bottom plate and the second plate being fixed to said bottom plate across an angle.

8. Device according to claim 7, **characterized in that** the bottom plate is provided with flanged edges, in which the common axle is positioned in the flanged rear edge and in which the rear edge of the bottom plate and the bottom plate both have a recess for being able to accommodate a roller wheel on the common axle.

9. Device according to claims 7-8, **characterized in that** the second plate has a straigth front portion and side portions extending at least partly along the respective side edges of the bottom plate.

10. Device according to claim 9, **characterized in that** the side portions of the second plate are likewise part of the bearing of the common axle or support its bearing.

11. Device according to claims 7-10, **characterized in that** a further weight reduction is effected in the first and second plate by omitting parts of the plates.

12. Device according to claims 1-11, **characterized in that** means for securing at least one apparatus on the device are provided, said means comprising at least one receiving edge and a locking member arranged for engaging at least one location on said apparatus.

13. Device according to claim 12, **characterized in that** the locking member substantially comprises a slide under spring tension, being intended for engaging an opening or a passage in the device.

14. Device according to claims 1-13, **characterized in that** it is provided with a vertically adjustable brace which can be adjusted from a folded-in position to a folded-out position and back, with the brace in the folded-out position being intended for pushing or pulling the device forward.

15. Device according to claims 1-13, **characterized in that** it is provided with a holder for an elongate member, such as an antenne, for example, in which the holder is adjustable and fixable across a predetermined angular range.

16. Device according to claims 1-15 , **characterized in that** it has at least one side provided with a pivotable holder for e.g. a coil or a drum.

17. Device according to claims 1-16, **characterized in that** a protecting brace for protecting an apparatus mounted on the device is provided.
